# EUROPÄISCHE PATENTANMELDUNG

(11) **EP 2 251 194 A1**
(43) Veröffentlichungstag der Anmeldung: **17.11.2010**
(21) Anmeldenummer: 10003110.3
(22) Anmeldetag: 24.03.2010
(51) Int. Cl.: B32B 27/08, B32B 27/36, B65D 43/02, B65D 65/40, B65D 77/20

(54) **Behälterdeckel**

(30) Priorität: 23.04.2009 CH 6542009; 26.11.2009 CH 18282009
(71) Anmelder: Amcor Flexibles Kreuzlingen Ltd., 8280 Kreuzlingen (CH)
(72) Erfinder: Wolters, Detlef, 79379 Müllheim (DE)

(57) **Zusammenfassung**

Ein Deckel (10) besteht aus einem Trägermaterial (12) mit auf beiden Seiten einer Kernschicht (16) aus einer Folie aus Kunststoff, aus einem Vlies (nonwoven) oder aus einem Spinnvlies aus Kunststoff oder aus einem mit Trockenstoff gefüllten Kunststoff und einer, bezogen auf einen Behälter, an dem der Deckel (10) angewendet wird, nach innen weisenden Siegelschicht (24) zum Verschliessen des eine Schulter aufweisenden Behälters.

## Beschreibung

Die Erfindung betrifft einen Deckel aus einem Trägermaterial mit auf beiden Seiten einer Kernschicht angeordneten Polyesterschichten und einer, bezogen auf einen Behälter, an dem der Deckel angewendet wird, nach innen weisenden Siegelschicht zum Verschliessen des eine Schulter aufweisenden Behälters.

Es ist bekannt, Behälter, wie beispielsweise tiefgezogene, spritzgegossene oder anderweitig geformte Behälter, an deren Öffnung mit einer ebenen ringförmigen Schulter zu versehen und solche Behälter, insbesondere nach dem Befüllen, zu bedeckeln, wobei der Deckel vollflächig auf der Schulter aufliegt und beispielsweise durch Siegeln oder Kleben an der Schulter peelbar und dichtend befestigt wird. Solche Behälter, Schalen, Menuschalen, beispielsweise mit einem oder mehreren Fächern, Becher, Kleinverpackungen usw. sind beispielsweise bekannt zum Verpacken von Nahrungsmitteln aller Art, wie z.B. Milchprodukte, insbesondere Joghurt, Schlagsahne, Sauermilch, Sauerrahm, Kaffeesahne, Fertigzubereitungen von Salaten oder Halb- oder Vollkonserven, vorgekochten oder anderweitig vorbereiteten Gerichten, Getränke, wie Frucht- und Gemüsesäfte oder Trinkwasser.

Die Deckel werden beispielsweise aus einem endlos vorliegenden Deckelmaterial ausgestanzt und gestapelt. Die Deckelstapel werden einer Verpackungsmaschine zugeführt und die vereinzelten oder entstapelten Deckel fortlaufend auf die bereits befüllten Behälter aufgesiegelt. Die mit einer Siegelschicht versehenen Deckel werden mittels eines Siegelwerkzeuges im Schulterbereich des Behälters auf den Behälterrand aufgesiegelt.

Das Deckelmaterial kann aus verschiedensten Materialien, je nach den gestellten Anforderungen, sein. Typische Beispiele sind Metallfolien, wie Aluminiumfolien, die ein- oder beidseitig mit Kunststoff beschichtet sind. Andere Deckelmaterialien enthalten oder bestehen aus Kunststoffen in Form von Monofolien oder Mehrschichtlaminaten. Weitere Deckelmaterialien können aus cellulosehaltigen Materialien, wie Zellglas oder Papier sein. Eingesetzt werden auch Laminate aus Metall- und Kunststofffolien. Um das Deckelmaterial mit dem Behälterrand zu versiegeln, wird das Deckelmaterial beispielsweise vollflächig oder in Form eines der Schulter des Behälters entsprechenden Druckbildes mit einer Siegelschicht, wie einem Siegellack oder einer Siegelfolie versehen, wobei die Siegelschicht wenigstens auf der, an der fertigen Verpackung nach innen weisenden Seite, d.h. gegen den Behälterinnenraum weisend, angebracht ist.

Aus Aluminiumfolie gefertigte Deckel neigen beim Öffnen zum Einreissen und sind nicht durchstossfest. Alternative Konzepte auf Basis einer einschichtigen, orientierten PET-Folie sind relativ teuer.

DE 20 2004 010 214 U1 offenbart einen Deckel zum Verschliessen von Nahrungsmittelbehältern mit einem Trägermaterial aus einem symmetrischen Verbund mit einer Kernschicht aus Papier und beidseitig an diese angebrachten Polyesterlagen. An seiner dem Behälter zugewandten Seite ist das Trägermaterial mit einer Siegelschicht versehen.

Der Nachteil einer PET/Papier/PET-Verbundfolie wird in einer möglichen Feuchtigkeitsaufnahme des Papiers über den gestanzten Deckelrand gesehen. Durch eine Feuchtigkeitsaufnahme wäre der Deckel nicht mehr formstabil und würde nicht mehr plan eben liegen. Des Weiteren führt eine Feuchtigkeitsaufnahme beim nachfolgenden Siegelprozess unter hohen Temperaturen zur schlagartigen Verdampfung der Feuchtigkeit und damit zur Blasenbildung zwischen Papier und Polyesterfolie oder sogar zur flächigen Delamination grosser Teile des Verbundes.

Der Erfindung liegt die Aufgabe zugrunde, einen Deckel der eingangs genannten Art vorzuschlagen, mit welchem die den Deckeln nach dem Stand der Technik anhaftenden Nachteile vermieden werden.

Zur erfindungsgemässen Lösung der Aufgabe führt, dass die Kernschicht eine Folie aus geschäumtem Kunststoff, aus einem Vlies (nonwoven) oder aus einem Spinnvlies aus Kunststoff oder aus einem mit Trockenstoff gefüllten Kunststoff ist.

Durch den Einsatz einer geschäumten Kunststofffolie, insbesondere einer geschäumten OPP-Folie -- auch unter dem Begriff OPP pearl oder pearlized bekannt --, einem Vlies (nonwoven) oder aus einem Spinnvlies aus Kunststoff oder aus einem optional mit Trockenstoff gefüllten Kunststoff kann bei geringem Materialeinsatz eine feuchtigkeitsresistente, steife Stützschicht in einen symmetrischen Verbund eingebaut werden, welcher die Nachteile eines PET/Papier/PET-Verbundes nicht zeigt.

Weiter hat sich gezeigt, dass ein Verbund mit zwei aussenliegenden Polyesterschichten und einer dazwischen angeordneten Kunststoffschicht, die mit einem Trockenstoff gefüllt oder nicht gefüllt, sowie gereckt oder ungereckt sein kann, gegenüber einer für den gleichen Zweck eingesetzten Polyester-Monofolie zusätzlich eine höhere Steifigkeit bei gleichzeitig geringerem Gewicht aufweist.

Durch den Einsatz PVC-freier Siegellacke oder Extrusionsgranulate und durch die Aluminium-Freiheit des Deckelmaterials ergibt sich ein ökologisch vorteilhaftes System.

Das Deckelmaterial wird beispielsweise derart hergestellt, dass eine Folie aus optional geschäumtem und orientiertem Polypropylen (PP) durch Kaschieren oder Kalandrieren mit zwei Folien aus orientiertem Polyethylenterephthalat (PET) zu der mehrschichtigen Trägerfolie verarbeitet wird. Auf der am fertigen Behälter nach innen weisenden Seite des Deckelmaterials wird durch Lackieren oder durch Extrusionsbeschichten die Siegelschicht aufgebracht. Die PET-Folie kann beispielsweise auf der Rückseite bedruckt sein. Dadurch zeigt der Druck, geschützt durch die unbedruckte PET-Aussenseite, einen hohen Glanz und ist gegen Umwelteinflüsse, wie z.B. Kratzer oder die Siegeltemperatur, zuverlässig geschützt. Da auch Polypropylen (PP) und insbesondere orientiertes Polypropylen (OPP) sehr gut bedruckbar ist, kann vor der Kaschierung mit der PET-Folie auch die PP-Folie bedruckt werden.

Die Polyesterschichten bestehen bevorzugt aus Polyethylenterephthalat (PET).

Die Kernschicht kann eine Folie aus einem Vlies (nonwoven) oder Spinnvlies aus Polypropylen (PP), Polyethylen (PE), Polyethylenterephthalat (PET) oder Polyamid (PA) sein.

Die Kernschicht kann auch eine Folie aus einem optional mit Trockenstoff, vorzugsweise Kreide oder Talkum, gefüllten Polypropylen (PP), Polyethylen (PE), Polyethylenterephthalat (PET), Polystyrol (PS) oder Polyamid (PA) sein.

Die Dicke der Polyesterschichten beträgt bevorzugt 8 bis 25 µm, insbesondere 10 bis 14 µm.

Die Dicke der Kernschicht beträgt bevorzugt 10 bis 50 µm, insbesondere 20 bis 40 µm.

Bevorzugt sind die vorzugsweise biaxial gereckten Polyesterschichten als Folien mittels eines Kaschierklebers mit der Kernschicht zu dem Trägermaterial verbunden.

Die Siegelschicht kann eine Extrusionsschicht oder ein Siegellack sein. Sie kann vollflächig oder in Form eines der Schulter des Behälters entsprechenden Druckbildes angeordnet sein. Zur Siegelung gegen einen Behälter bzw. Becher aus PET kann ein siegelfähiges PET eingesetzt werden. Für andere typische Bechermaterialien, wie Polypropylen (PP), Polystyrol (PS), A-PET, Polyethylen (PE), wird mittels Lackierung oder Extrusionsbeschichtung ein entsprechendes Siegelmedium eingesetzt. Das Siegelmaterial kann dabei auch ein Kombi-Siegelmaterial sein, welches gegen alle der genannten Bechermaterialien siegelt.

Das Vereinzeln oder Entstapeln der Deckel durch Entnahme vom Deckelstapel wird von den Verpackungsmaschinen nicht immer zuverlässig durchgeführt, da die aneinander liegenden Deckel unerwünscht gegenseitig aneinander haften können. Um ein sicheres Entstapeln bzw. Vereinzeln der Deckel zu gewährleisten, kann die Siegelschicht zumindest teilweise in Form von Abstandshaltern vorliegen. Durch die Abstandshalter kann bei gestapelten Deckeln Luft zwischen die Deckel eintreten, so dass diese beim Entstapeln bzw. Vereinzeln leicht von einander abgehoben werden können.

Die Abstandshalter liegen bevorzugt in Form eines Druckmusters vor. Das Druckmuster kann beispielsweise ein gleich- oder ungleichmässig verteiltes Punkt- oder Strichraster sein. Anstelle von aufgedruckten Abstandshaltern kann der Deckel auch mit einer Prägung versehen sein.

Das Druckmuster mit den Abstandshaltern kann in der gleichen oder einer vorangestellten oder hintennachgestellten Druckmaschine, d.h. gleichzeitig mit, vor oder nach der Erzeugung der Siegelschicht, auf das Trägermaterial aufgebracht werden. Zweckmässig wird das Druckmuster mit der gleichen Druckform, welche die Siegelschicht aufdruckt, aufgebracht. Besonders geeignet ist dabei das Aufbringen partieller Siegelränder, da dadurch bei einer metallisierten Innenschicht der hohe Glanz der metallisierten PET-Folie erhalten bleibt. Durch Aufbringen des Siegellackes in Ringform im Bereich der späteren Versiegelung kann ausserdem bei einer Lackierung ein grosser Teil Lack eingespart werden, da Polyester, im Gegensatz zu Aluminium, nicht mit vollflächiger Lackierung gegen Korrosion geschützt werden muss.

Das Trägermaterial kann auch eine Sperrschicht gegen Gase, Dämpfe und Feuchtigkeit aufweisen. Sperrschichten können beispielsweise eine Schicht aus keramischen Materialien, wie den Oxiden oder Nitriden des Siliziums oder Aluminiums, sein, die in dünner Schicht, z.B. im Bereich von 10 bis 500 nm, in einem Vakuumdünnschichtverfahren auf eine Trägerfolie abgeschieden worden sind. Beispiele weiterer Sperrschichten sind metallische Schichten, z.B. aus Aluminium, die durch Sputtern auf dem Träger abgeschieden werden. Eine Metallisierung kann auch aus optischen Gründen erfolgen. Die Sperrschicht bzw. Metallisierung kann auf eine oder beide Polyesterschichten aufgebracht sein.

Auf der -- an dem späteren fertigen Behälter -- nach aussen weisenden Seite des Deckels kann eine Bedruckung angeordnet sein. Das Bedrucken des Trägermaterials kann mit allen bekannten Druckverfahren vorgenommen werden, so z.B. Buch-, Offset-, Flexo-, Sieb-, Helio- und Kupfertiefdruck. Die Wahl, welches Druckverfahren zur Anwendung kommt hängt von der gewünschten Druckqualität, von den jeweiligen technischen Gegebenheiten und der Auflagenhöhe ab. Bevorzugt ist der Flexodruck (auch Anilin- oder Gummidruck genannt), das UV Flexoverfahren und der Tiefdruck, wie Kupfertiefdruck, oder der Heliodruck. Die Bedruckung auf der Aussenseite des Trägermaterials kann beispielsweise zusätzlich mittels eines Schutzlackes überlackiert sein.

Die Siegelschicht, wie auch das Druckmuster, können einen Siegellack enthalten oder daraus bestehen. Beispiele von für die Siegelschicht und das Druckmuster geeigneten Polymeren sind Polyolefine, Vinylpolymere, Acrylpolymere, deren Copolymere oder Mischungen daraus. Die Siegelschicht, wie auch das Druckmuster können auch den Siegellack und einen Haftvermittler oder Primer, beispielsweise aus einem Polyester oder einem Vinylpolymer, enthalten. Der Haftvermittler oder Primer ist vorteilhaft auf dem Träger und der Siegellack auf dem Haftvermittler oder Primer aufgebracht.

Neben den genannten Siegellacken können auch Dispersionen oder Lacke, sowohl lösungsmittelhaltige, als auch lösungsmittelfreie Lacke, wie polymerhaltige Lacke, z.B. auf Basis von PVC, PVC/PVAC, PVDC oder Acrylaten, für die die Siegelschicht und für die Formung des Druckmusters verwendet werden. Der Festkörpergehalt in den Lacken soll möglichst hoch und der Anteil an Lösungsmitteln möglichst tief sein. Sinngemäss müssen die Dispersionen und Lacke druckmaschinengängig sein.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: einen Schnitt durch eine erste Ausführungsform eines Deckels;
- Fig. 2: einen Schnitt durch eine zweite Ausführungsform eines Deckels;
- Fig. 3: einen Schnitt durch einen zur Siegelung gegen den Rand eines Behälters vorgesehenen Deckel.

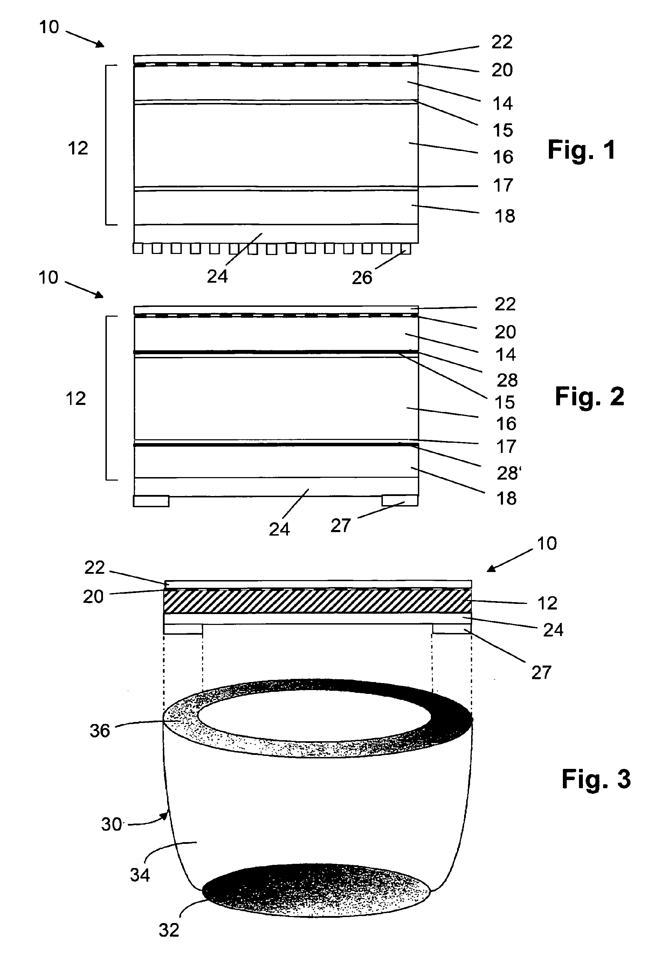

Ein in Fig. 1 und 2 gezeigter Deckel 10 weist ein Trägermaterial 12 mit einer Kernschicht 16 aus einer 20 - 40 µm dicken Folie aus geschäumtem, orientiertem Polypropylen (OPP pearlized) auf. Beide Seiten der Kernschicht 16 sind über Kaschierkleberschichten 15, 17 in einer Auftragsstärke von 2 - 4 g/m² mit je einer orientierten, 12 µm dicken PET-Folie 14, 18 verbunden. Das Trägermaterial 12 ist mit einer aussenseitigen Bedruckung 20 und einer die Bedruckung überdeckenden Schutzlackschicht 22 versehen. Auf der Deckelinnenseite weist das Trägermaterial 12 eine Siegelschicht 24 auf.

Bei einer in Fig. 1 gezeigten ersten Ausführungsform eines Deckels 10 ist auf der Siegelschicht 24 ein mittels eines Druckverfahrens auf das Trägermaterial 12 aufgebrachtes Druckmuster aus Abstandshaltern 26 angeordnet.

Bei einer in Fig. 2 dargestellten zweiten Ausführungsform eines Deckels 10 weisen die PET-Folien 14, 18 auf der gegen die Kernschicht 16 gerichteten Seite eine Metallisierung in der Form einer aus dem Vakuum abgeschiedenen Dünnschicht aus z. B. Aluminium als Barriereschicht 28, 28' auf. Auf der Siegelschicht 24 ist ein mittels eines Druckverfahrens auf das Trägermaterial 12 aufgebrachtes ringförmiges Druckbild 27 aus einem Siegellack aufgetragen.

Wie in Fig. 3 gezeigt, entspricht das ringförmige Druckbild 27 der Siegelschicht von Fig. 2 einer den oberen Randabschluss bildenden ringförmigen Schulter 36 eines durch einen Boden 32 und eine von diesem aufragende Seitenwand 34 charakterisierten Bechers oder Behälters 30. Nach dem Befüllen des Behälters 30 mit beispielsweise einem Nahrungsmittel oder einem Getränk, wie Joghurt, Marmelade, Trockenfrüchten, einer Schokoladenzubereitung oder einem anderen Dessert oder mit Trinkwasser oder Frucht- und Gemüsesäften, wird der Behälter 30 mit dem Deckel 10 bedeckt, und der Deckel 10 wird über die der Schulter 36 des Behälters 30 aufliegende ringförmige Siegelschicht 27 gegen den Randabschluss des Behälters 30 gesiegelt.

## Patentansprüche

1. Deckel aus einem Trägermaterial (12) mit auf beiden Seiten einer Kernschicht (16) angeordneten Polyesterschichten (14, 18) und einer, bezogen auf einen Behälter (30), an dem der Deckel (10) angewendet wird, nach innen weisenden Siegelschicht (24) zum Verschliessen des eine Schulter (36) aufweisenden Behälters (30),
**dadurch gekennzeichnet, dass**
die Kernschicht (16) eine Folie aus Kunststoff, aus einem Vlies (nonwoven) oder aus einem Spinnvlies aus Kunststoff oder aus einem mit Trockenstoff gefüllten Kunststoff ist.

2. Deckel nach Anspruch 1, **dadurch gekennzeichnet, dass** die Polyesterschichten (14, 18) aus Polyethylenterephthalat (PET) bestehen.

3. Deckel nach Anspruch 1, **dadurch gekennzeichnet, dass** die Kernschicht (16) eine Folie aus geschäumtem und vorzugsweise orientiertem Polypropylen (OPP pearlized) ist.

4. Deckel nach Anspruch 1, **dadurch gekennzeichnet, dass** die Kernschicht (16) eine Folie aus einem Vlies (nonwoven) oder Spinnvlies aus Polypropylen (PP), Polyethylen (PE), Polyethylenterephthalat (PET) oder Polyamid (PA) ist.

5. Deckel nach Anspruch 1, **dadurch gekennzeichnet, dass** die Kernschicht (16) eine Folie aus einem optional mit Trockenstoff, vorzugsweise Kreide oder Talkum, gefüllten Polypropylen (PP), Polyethylen (PE), Polyethylenterephthalat (PET), Polystyrol (PS) oder Polyamid (PA) ist.

6. Deckel nach einem der Ansprüche 1 bis 5, **dadurch gekennzeichnet, dass** die Dicke der Polyesterschichten (14, 18) 8 bis 25 µm, insbesondere 10 bis 14 µm, beträgt.

7. Deckel nach einem der Ansprüche 1 bis 5, **dadurch gekennzeichnet, dass** die Dicke der Kernschicht (16) 10 bis 50 µm, insbesondere 20 bis 40 µm, beträgt.

8. Deckel nach einem der Ansprüche 1 bis 7, **dadurch gekennzeichnet, dass** die vorzugsweise biaxial gereckten Polyesterschichten (14, 18) als Folien mittels eines Kaschierklebers (15, 17) mit der Kernschicht (16) zu dem Trägermaterial (12) verbunden sind.

9. Deckel nach einem der Ansprüche 1 bis 8, **dadurch gekennzeichnet, dass** die Siegelschicht (24) eine Extrusionsschicht oder ein Siegellack ist.

10. Deckel nach einem der Ansprüche 1 bis 8, **dadurch gekennzeichnet, dass** die Siegelschicht (24) vollflächig oder in Form eines der Schulter (36) des Behälters (30) entsprechenden Druckbildes (27) angeordnet ist.

11. Deckel nach einem der Ansprüche 1 bis 8, **dadurch gekennzeichnet, dass** die Siegelschicht (24) zumindest teilweise in Form von Abstandshaltern (26) vorliegt.

12. Deckel nach Anspruch 11, **dadurch gekennzeichnet, dass** die Abstandshalter (26) in Form eines Druckmusters, insbesondere als gleich- oder ungleichmässig verteiltes Punkt- oder Strichraster, vorliegen.

13. Deckel nach Anspruch 11 oder 12, **dadurch gekennzeichnet, dass** das Druckmuster aus einem Polyolefine, Vinylpolymere, Acrylpolymere, deren Copolymere oder Mischungen daraus enthaltenden Siegellack gebildet ist.

14. Deckel nach einem der Ansprüche 1 bis 13, **dadurch gekennzeichnet, dass** das Trägermaterial (12) eine Sperrschicht (28, 28') aus einer keramischen oder metallisierten Schicht enthält.

15. Deckel nach einem der Ansprüche 1 bis 14, **dadurch gekennzeichnet, dass** das Trägermaterial (12) auf der dem Behälter (30) abgewandten Seite eine Bedruckung (20) aufweist.
